# EUROPEAN PATENT APPLICATION

(11) **EP 2 216 298 A1**
(43) Date of publication of application: **11.08.2010**
(21) Application number: 08846681.8
(22) Date of filing: 04.11.2008
(51) Int. Cl.: C01G 49/00, H01M 2/16, H01M 4/52, H01M 10/36

(54) **COMPLEX METAL OXIDE AND SODIUM SECONDARY BATTERY**

(30) Priority: 09.11.2007 JP 2007292440
(71) Applicant: Sumitomo Chemical Company, Limited, Tokyo 104-8260 (JP)
(72) Inventor: KUZE, Satoru, Tsukuba-shi Ibaraki 305-0045 (JP); MAKIDERA, Masami, Tsukuba-shi Ibaraki 305-0047 (JP); YAMAMOTO, Taketsugu, Tsukuba-shi Ibaraki 305-0045 (JP)
(74) Representative: Hart-Davis, Jason
(86) International application number: PCT/JP2008/070040
(87) International publication number: WO 2009/060828

(57) **Abstract**

Disclosed is a mixed metal oxide which is extremely useful as a positive electrode active material for secondary batteries, while being reduced in the amount of a scarce metal used therein. Also disclosed are a positive electrode for sodium secondary batteries, and a sodium secondary battery. Specifically disclosed is a mixed metal oxide having an α-NaFeO₂ type (layered rocksalt-type) crystal structure and represented by the following forumla: NaₓFe_{1-y}M_{y}O₂ (wherein M represents one or more elements selected from the group consisting of group 4 elements, group 5 elements, group 6 elements and group 14 elements of the IUPAC periodic table and Mn; x represents a value more than 0.5 but less than 1; and y represents a value more than 0 but less than 0.5). Also specifically disclosed are a positive electrode for sodium secondary batteries, which contains the mixed metal oxide, and a sodium secondary battery.

## Description

### TECHNICAL FIELD

The present invention relates to a mixed metal oxide. More specifically, the present invention relates to a mixed metal oxide capable of being doped and undoped with sodium ions, and in particular to a mixed metal oxide usable as a positive electrode active material of a sodium secondary battery. The present invention also relates to a sodium secondary battery using the mixed metal oxide as a positive electrode active material.

### BACKGROUND ART

A mixed metal oxide is used for a secondary battery. Among secondary batteries, a lithium secondary battery has already been put into practical use as a small power source for a cellular phone, a notebook computer and the like. Furthermore, a need for a lithium secondary battery as a large power source for electric vehicles, distributed power storages and the like is to be increasing. Therefore, it is necessary to consider changing a material of a lithium secondary battery, in which a generous amount of scarce metals, such as cobalt, nickel and lithium are used. As a less expensive material of the secondary battery, sodium has been considered since it is one digit cheaper than lithium and abundant as a resource. A use of a sodium secondary battery in place of a lithium secondary battery enables mass-production of a large secondary,battery for electric vehicles, distributed power storages and the like, without fear of depletion of resources.

Examples of a lithium secondary battery include a secondary battery using a lithium-containing mixed metal oxide for a positive electrode, and a lithium metal or a lithium alloy for a negative electrode; and a secondary battery using a lithium-containing mixed metal oxide for a positive electrode, and a carbonaceous material or the like for the negative electrode. Examples of a sodium secondary battery include a secondary battery using a sodium-containing mixed metal oxide for a positive electrode, and a sodium metal or a sodium alloy for a negative electrode; and a secondary battery using a sodium-containing mixed metal oxide for a positive electrode, and a carbonaceous material or the like for a negative electrode.

In order to form a sodium secondary battery, a positive electrode active material capable of being doped and undoped with sodium ions, and a negative electrode active material capable of being doped and undoped with sodium ions are necessary. As the positive electrode active material, Patent Document 1 specifically discloses, in examples thereof, an α-NaFeO₂ having a hexagonal (layered rocksalt-type) crystal structure as a mixed metal oxide, and the mixed metal oxide is obtained by mixing Na₂O₂ and Fe₃O₄ and calcining the mixture at 600 to 700°C in an air atmosphere.

Patent Document 2 specifically discloses a secondary battery comprising a positive electrode composed of NaFeO₂, a negative electrode having carbon as a sodium ion- or lithium ion-storing material, and a nonaqueous electrolyte containing lithium ions. Patent Document 3 discloses a secondary battery comprising positive electrode containing a NaFeO₂ and negative electrode containing a lithium alloy.

Patent Document 1: Japanese Unexamined Patent Publication No. 2005-317511
Patent Document 2: Japanese Unexamined Patent Publication No. 11-040156
Patent Document 3: Japanese Unexamined Patent Publication No. 2002-151074

### DISCLOSURE OF THE INVENTION

### PROBLEMS TO BE SOLVED BY THE INVENTION

According to the secondary battery using a positive electrode active material composed of a mixed metal oxide, NaFeO₂, disclosed in Patent Documents 1 to 3, the used amount of a scarce metal, such as cobalt, nickel and lithium can be reduced as compared with the existing lithium secondary battery. However, there is still room for an improvement with respect to the performance as a secondary battery, for example, a discharge capacity after repeatedly charging to a high voltage and discharging. Accordingly, the present invention provides a mixed metal oxide very useful as a positive electrode active material, which is capable of reducing the used amount of the above-described scarce metals, and providing a secondary battery having a large discharge capacity after repeatedly charging and discharging.

Also, the present invention provides a positive electrode for sodium secondary batteries, and a sodium secondary battery, each using the mixed metal oxide.

### MEANS TO SOLVE THE PROBLEMS

As a result of intensive studies to attain the above-described objects, the present inventors have accomplished the present invention. The present invention is as follows.

(1) A mixed metal oxide, wherein the mixed metal oxide has an α-NaFeO₂-type (layered rocksalt-type) crystal structure and is represented by the following formula (I) :

   NaₓFe_{1-y}M_{y}O₂ (I)

   wherein M is one or more elements selected from Group 4 elements, Group 5 elements, Group 6 elements and Group 14 elements of the IUPAC Periodic Table and Mn, x is a value in the range of more than 0.5 and less than 1, and y is a value in the range of more than 0 and less than 0.5.
(2) The mixed metal oxide as described in (1) above, wherein the mixed metal oxide is composed of a single phase of an α-NaFeO₂-type (layered rocksalt-type) crystal structure.
(3) The mixed metal oxide as described in (1) or (2) above, wherein M at least contains one or more elements selected from Group 4 elements of the IUPAC Periodic Table.
(4) The mixed metal oxide as described in (1) or (2) above, wherein M contains at least Ti or Mn.
(5) The mixed metal oxide as described in (4) above, wherein M is Ti and/or Mn.
(6) The mixed metal oxide as described in (5) above, wherein M is Ti.
(7) The mixed metal oxide as described in (6) above, wherein y is a value in the range of more than 0 and less than 0.25.
(8) The mixed metal oxide as described in (5) above, wherein M is Mn.
(9) The mixed metal oxide as described in any one of (1) to (8) above, wherein the mixed metal oxide is to be used as a positive electrode active material for sodium secondary batteries.
(10) A positive electrode for sodium secondary batteries, wherein the positive electrode contains the mixed metal oxide described in (9) above.
(11) A sodium secondary battery having the positive electrode for sodium secondary batteries described in (10) above.
(12) The sodium secondary battery as described in (11) above further having a separator.
(13) The sodium secondary battery as described in (12) above, wherein the separator is a separator having a porous laminate film obtained by laminating a heat-resistant layer containing a heat-resistant resin and a shutdown layer containing a thermoplastic resin.

As described above, regarding the present invention, a sodium secondary battery includes a secondary battery using a sodium metal or a sodium alloy for a negative electrode; and a secondary battery using a sodium-containing mixed metal oxide for the positive electrode, and a carbonaceous material or the like for the negative electrode. These secondary batteries are collectively referred to as a sodium secondary battery, regarding the present invention.

### BRIEF DESCRIPTION OF THE DRAWINGS

Fig. 1 is a chart showing a result of a powder X-ray diffraction measurement in Comparative Example 1.
Fig. 2 is a chart showing a result of a powder X-ray diffraction measurement in Comparative Example 2.
Fig. 3 is a chart showing a result of a powder X-ray diffraction measurement in Example 1.
Fig. 4 is a chart showing a result of a powder X-ray diffraction measurement in Example 2.
Fig. 5 is a chart showing a result of a powder X-ray diffraction measurement in Example 3.
Fig. 6 is a chart showing a result of a powder X-ray diffraction measurement in Reference Example.
Fig. 7 is a chart showing a result of a powder X-ray diffraction measurement in Example 4.
Fig. 8 is a chart showing a result of a powder X-ray diffraction measurement in Example 5.
Fig. 9 is a chart showing a result of a powder X-ray diffraction measurement in Example 6.
Fig. 10 is a chart showing a result of a powder X-ray diffraction measurement in Example 7.
Fig. 11 is a chart showing a result of a powder X-ray diffraction measurement in Example 8.
Fig. 12 is a chart showing a result of a powder X-ray diffraction measurement in Example 9.

### BEST MODE FOR CARRYING OUT THE INVENTION

### <Mixed Metal Oxide of the Present Invention>

The mixed metal oxide of the present invention is characterized by having an α-NaFeO₂-type (layered rocksalt-type) crystal structure and being represented by the following formula (I) :

NaₓFe_{1-y}M_{y}O_{z} (I)

wherein M is one or more elements selected from Group 4 elements, Group 5 elements, Group 6 elements and Group 14 elements of the IUPAC Periodic Table and Mn, x is a value in the range of more than 0.5 and less than 1, and y is a value in the range of more than 0 and less than 0.5.

In the present invention, the IUPAC Periodic Table means the Periodic Table prescribed by the International Union of Pure and Applied Chemistry. In this Periodic Table, the "Group 4 elements" specifically include Ti, Zr and Hf, the "Group 5 elements" specifically include V, Nb and Ta, the "Group 6 elements" specifically include Cr, Mo and W, and the "Group 14 elements" specifically include C, Si, Ge, Sn and Pb.

In the mixed metal oxide of the present invention, at least a part of Fe of the mixed metal oxide having an α-NaFeO₂-type (layered rocksalt-type) crystal structure is substituted with a Group 4 element or the like. According to this invention, when the mixed metal oxide of the present invention is used as a positive electrode active material for sodium secondary batteries, a secondary battery having excellent performance, particularly a high discharge capacity after repeatedly charging to a high voltage and discharging, can be provided.

In the mixed metal oxide of the present invention, x is a value in the range of more than 0.5 and less than 1, whereby the mixed metal oxide can have a high-purity α-NaFeO₂-type (layered rocksalt-type) crystal structure, and preferably can be composed of a single phase of this crystal structure. In order to obtain a single phase, it is preferable that x and y in the present invention satisfy the relationship of x=1-y. By virtue of this relationship, when the mixed metal oxide of the present invention is used as a positive electrode active material for sodium secondary batteries, the proportion of the α-NaFeO₂-type (layered rocksalt-type) crystal, i.e. the proportion of the material capable of being doped and undoped with sodium, in the mixed metal oxide is increased, and therefore, the discharge capacity can become large. The crystal structure of the mixed metal oxide of the present invention can be identified by X-ray diffraction.

The mixed metal oxide of the present invention mainly uses iron and sodium which are abundant resources, and therefore can be produced at lower cost.

In one embodiment, in the mixed metal oxide of the present invention represented by formula (I), M at least contains one or more elements selected from the Group 4 elements of the IUPAC Periodic Table, and M contains at least Ti or Mn, and in particular M is Ti and/or Mn. These are preferred when the mixed metal oxide of the present invention is to be used as a positive electrode material for sodium secondary batteries. Regarding this purpose, when M is Ti, it is preferable that y in formula (I) be a value in the range of more than 0 and less than 0.25.

### <Method of producing Mixed Metal Oxide of the Present Invention>

The mixed metal oxide of the present invention can be produced by calcining a mixture of metal-containing compounds, the mixture having compositions capable of becoming the mixed metal oxide of the present invention after calcination. More specifically, metal-containing compounds containing corresponding metal elements are weighed and mixed so as to provide a predetermined composition, and the obtained mixture is calcined, whereby the mixed metal oxide of the present invention can be produced. For example, a mixed metal oxide having a composition represented by the formula of Na_{0.9}Fe_{0.9}Ti_{0.1}O₂, which is one of preferred compositions, can be produced by weighing respective raw materials of Na₂CO₃, Fe₃O₄ and TiO_{z} to give a Na:Fe:Ti molar ratio of 0.9:0.9:0.1, mixing these raw materials, and calcining the obtained mixture.

As the metal-containing compound usable for producing the mixed metal oxide of the present invention, an oxide, or a compound capable of becoming an oxide when decomposed and/or oxidized at a high temperature, such as a hydroxide, a carbonate, a nitrate, a halide or an oxalate, can be used. Fe₃O₄ is especially preferred as an iron compound.

In order to mix the metal-containing compounds, an apparatus usually employed in industry, such as a ball mill, a V-type mixer and stirrer, can be used. The mixing thereof may be either a dry mixing or a wet mixing. A mixture of metal-containing compounds having predetermined compositions may also be obtained by a precipitation method.

The above mixture of metal-containing compounds is calcined, for example, by keeping at a temperature in the range of 600°C to 1,600°C for 0.5 hours to 100 hours, whereby the mixed metal oxide of the present invention is obtained. The calcination temperature range is preferably from 600°C to 800°C. In the case where a compound capable of decomposing and/or oxidizing at a high temperature, such as a hydroxide, a carbonate, a nitrate, a halide or an oxalate, is used in the mixture of metal-containing compounds, the above-described calcination may be performed after preliminarily calcining the mixture by keeping at a temperature of 400°C to 1,600°C to convert the compound into an oxide or remove crystal water. An atmosphere in which the preliminary calcination is performed may be an inert gas atmosphere, an oxidizing atmosphere or a reducing atmosphere. After the preliminary calcination, the pre-calcined product may be pulverized.

The atmosphere in the calcination may be any of, for example, an inert atmosphere, such as nitrogen and argon; an oxidizing atmosphere, such as air, oxygen, oxygen-containing nitrogen and oxygen-containing argon; and a reducing atmosphere, such as hydrogen-containing nitrogen containing from 0.1 vol% to 10 vol% of hydrogen, and hydrogen-containing argon containing from 0.1 vol% to 10 vol% of hydrogen. In order to calcine in a strongly reducing atmosphere, the calcination may be carried out after incorporating an appropriate amount of carbon into the mixture of metal-containing compounds. Preferably, the calcination is carried out in an oxidizing atmosphere, such as air.

By using a fluoride, chloride or the like as the metal-containing compound, the crystallinity of a produced positive electrode active material can be enhanced, and/or the average particle diameter of a produced positive electrode active material can be increased. Regarding this purpose, an appropriate amount of a flux may be added to the mixture of metal-containing compounds. Examples of the flux include NaF, FeF₂, TiF₄, NaCl, FeCl₂, FeCl₃, TiCl₃, TiCl₄, Na₂CO₃, NaHCO₃, NH₄Cl and NH₄I.

Particularly, in the case of using the mixed metal oxide of the present invention as a positive electrode active material for sodium secondary batteries, it is sometimes preferred to adjust the particle size of the mixed metal oxide by optionally subjecting the mixed metal oxide obtained as above to, for example, pulverization by means of a ball mill, a jet mill or the like, washing classification or the like. Also, calcination may be carried out two or more times. The particle of the mixed metal oxide may be surface-treated, for example, by coating the surface with an inorganic substance containing Si, A1, Ti, Y or the like.

### <Positive Electrode for Sodium Secondary Batteries of the Present Invention and Production Method Thereof>

A positive electrode for sodium secondary batteries of the present invention contains the mixed metal oxide of the present invention. The positive electrode for sodium secondary batteries of the present invention can be produced by loading, on a positive electrode current collector, a positive electrode mixture containing the mixed metal oxide of the present invention, an electrically conductive material and a binder.

Examples of the electrically conductive material include a carbon aceous material, such as natural graphite, artificial graphite, coke, and carbon black. Examples of the binder include a thermoplastic resin, and specific examples thereof include a fluororesin, such as polyvinylidene fluoride (hereinafter referred to as "PVDF"), polytetrafluoroethylene, ethylene tetrafluoride-propylene hexafluoride-vinylidene fluoride-based copolymer, propylene hexafluoride-vinylidene fluoride-based copolymer, and ethylene tetrafluoride-perfluorovinyl ether-based copolymer; and a polyolefin resin, such as polyethylene and polypropylene. Examples of the positive electrode current collector which can be used include A1, Ni and stainless steel.

The method for loading a positive electrode mixture on a positive electrode current collector includes a method of pressure-molding the mixture, and a method of forming the positive electrode mixture into a paste by using an organic solvent or the like, coating and drying the paste on a positive electrode current collector, and fixing the coating by pressing. In the case of forming a paste, a slurry comprising a positive electrode active material, an electrically conductive material, a binder and an organic solvent is prepared. Examples of the organic solvent include an amine-based solvent, such as N,N-dimethylaminopropylamine and diethyltriamine; an ether-based solvent, such as ethylene oxide and tetrahydrofuran; a ketone-based solvent, such as methyl ethyl ketone; an ester-based solvent, such as methyl acetate; and an aprotic polar solvent, such as dimethylacetamide and N-methyl-2-pyrrolidone. Examples of the method for coating a positive electrode mixture on a positive electrode current collector include a slit die coating method, a screen coating method, a curtain coating method, a knife coating method, a gravure coating method, and an electrostatic spraying method.

### <Sodium Secondary Battery of the Present Invention>

A sodium secondary battery of the present invention has the positive electrode for sodium secondary batteries of the present invention. The sodium secondary battery of the present invention can be produced by stacking a separator, a negative electrode comprising a negative electrode current collector having loaded thereon a negative electrode mixture, and the positive electrode for sodium secondary batteries of the present invention, winding the stack to obtain an electrode group, housing the electrode group in a battery can, and impregnating the electrode group with an electrolytic solution composed of an organic solvent containing an electrolyte.

Examples of the shape of the electrode group include a shape that gives a cross section of a circular shape, an elliptical shape, a rectangular shape, a corner-rounded rectangular shape or the like, when the electrode group is cut in the direction perpendicular to the winding axis. Examples of the shape of the battery include a paper shape, a coin shape, a cylinder shape, and a square shape.

### <Sodium Secondary Battery of the Present Invention/Negative Electrode>

A negative electrodes usable in the sodium secondary battery of the present invention include sodium metal, a sodium alloy, and a negative electrode obtained by loading, on a negative electrode current collector, a negative electrode mixture containing a material capable of being intercalated and deintercalated with sodium ions. The material capable of being intercalated and deintercalated with sodium ions includes a carbon aceous material, such as natural graphite, artificial graphite, coke, carbon black, pyrolytic carbons, carbon fiber and calcined organic polymer compound. The shape of the carbon aceous material may be any of a flake, such as natural graphite, a sphere, such as mesocarbon microbead, a fiber, such as graphitized carbon fiber, or an aggregate of fine powder.

As the material capable of being intercalated and deintercalated with sodium ions, a chalcogen compound, such as oxide and sulfide, capable of being intercalated and deintercalated with sodium ions at a lower potential than a positive electrode may also be used.

The negative electrode mixture may contain a binder, if necessary. Accordingly, the negative electrode of the sodium secondary battery of the present invention may be configured to contain a mixture of a carbon aceous material and a binder. The binder includes a thermoplastic resin, and specific examples thereof include PVDF, thermoplastic polyimide, carboxymethyl cellulose, polyethylene and polypropylene.

Examples of the negative electrode current collector include Cu, Ni and stainless steel, and Cu is preferred because Cu is difficult to be an alloy with lithium or sodium, and is easily formed into a thin film. Examples of the method for loading a negative electrode mixture on a negative electrode current collector are the same as in the case of a positive electrode and include a method of pressure-molding the mixture, and a method of forming the negative electrode mixture into a paste by using a solvent or the like, coating and drying the paste on a negative electrode current collector, and fixing the coating by pressing.

### <Sodium Secondary Battery of the Present Invention/Separator>

As a separator usable in the sodium secondary battery of the present invention, a member having a form, such as porous film, nonwoven fabric and woven fabric and made of a material of a polyolefin resin, such as polyethylene and polypropylene, a fluororesin or a nitrogen-containing aromatic polymer can be used. A single-layer or multilayer separator using two or more of these materials may also be used. Examples of the separator include separators described in Japanese Unexamined Patent Publication Nos. 2000-30686 and 10-324758. A thickness of the separator is preferably smaller as long as the mechanical strength can be maintained, from the standpoint of increase in the volumetric energy density of a battery and decrease in internal resistance thereof. In general, a thickness of the separator is preferably about 4 to 200 µm, more preferably about 4 to 40 µm.

In a secondary battery, usually, when an extraordinary current flows in the battery due to short-circuit between a positive electrode and a negative electrode, or the like, the current is preferably blocked to prevent an overcurrent from flowing (to shutdown). Accordingly, the separator preferably activates a shutdown (clogs fine pores of the porous film) at as a low temperature as possible in case of exceeding a usual use temperature. Further, even when the temperature in the battery rises to a certain high temperature after the shutdown, it is preferable that the separator maintain the shutdown state without being ruptured due to the temperature, in other words, have high heat resistance. The secondary battery of the present invention can be more successfully prevented from thermal film rupture by using, as the separator, a separator having a porous laminate film in which a heat-resistant layer containing a heat-resistant resin and a shutdown layer containing a thermoplastic resin are laminated.

### sodium Secondary Battery of the Present Invention/Separator/Porous Laminate Film Separator>

The separator composed of a porous laminate film obtained by laminating a heat-resistant layer containing a heat-resistant resin and a shutdown layer containing a thermoplastic resin is described below. The thickness of the separator is usually 40 µmM or less, preferably 25 µm or less. Assuming that the thickness of the heat-resistant layer is A (µm) and the thickness of the shutdown layer is B (µm), the value of A/B is preferably from 0.1 to 1. Considering the ion permeability, the permeability of the separator is, in terms of Gurley permeability, preferably from 50 to 300 seconds/100 ml, more preferably from 50 to 200 seconds/100 ml. The void content of the separator is usually from 30 to 80 vol%, preferably from 40 to 70 vol%,

### (Heat-Resistant Layer)

In the porous laminate film, the heat-resistant layer contains a heat-resistant resin. In order to elevate the ion permeability, the thickness of the heat-resistant layer is preferably from 1 to 10 µm, more preferably from 1 to 5 µm, and particularly preferably from 1 to 4 µm to be a thinner heat resistant layer. The heat-resistant layer has fine pores, and the size (diameter) of the pore is usually 3 µm or less, preferably 1 µm or less. The heat-resistant layer may contain a filler described later.

The heat-resistant resin contained in the heat-resistant layer includes polyamide, polyimide, polyamideimide, polycarbonate, polyacetal, polysulfone, polyphenylene sulfide, polyether ketone, aromatic polyester, polyethersulfone and polyetherimide. From the standpoint of further enhancing the heat resistance, polyamide, polyimide, polyamideimide, polyethersulfone and polyetherimide are preferred; and polyamide, polyimide and polyamideimide are more preferred. The heat-resistant resin is more preferably a nitrogen-containing aromatic polymer, such as aromatic polyamide (para-oriented aromatic polyamide, meta-oriented aromatic polyamide), aromatic polyimide and aromatic polyamideimide, still more preferably an aromatic polyamide, and in view of production, yet still more preferably a para-oriented aromatic polyamide (hereinafter, referred to as "para-aramide"). In addition, the heat-resistant resin also includes poly-4-methylpentene-1, and a cyclic olefin-based polymer. By using such a heat-resistant resin, the heat resistance can be enhanced, i.e. the thermal film rupture temperature can be raised.

The thermal film rupture temperature depends on the types of heat-resistant resin, but the thermal film rupture temperature is usually 160°C or more. By using the above-described nitrogen-containing aromatic polymer as the heat-resistant resin, the thermal film rupture temperature can be raised up to about 400°C. The thermal film rupture temperature can be raised up to about 250°C by using poly-4-methylpentene-1, and up to about 300°C by using a cyclic olefin-based polymer.

The para-aramide is obtained by condensation polymerization of a para-oriented aromatic diamine and a para-oriented aromatic dicarboxylic acid halide, and is substantially composed of a repeating unit where the amide bond is bonded at the para-position or equivalently oriented position (for example, the oriented position extending coaxially or in parallel to the opposite direction, such as 4,4'-biphenylene, 1,5-naphthalene, and 2,6-naphthalene) of the aromatic ring. The para-aramide includes a para-aramide having a para-oriented-type and quasi-para-oriented-type structures. Specific examples thereof include poly(paraphenyleneterephthalamide), poly(parabenzamide), posy(4,4'-benzanilideterephthalamide), poly(paraphenylene-4,4'-biphenylenedicarboxylic acid amide), poly(paraphenylene-2,6-naphthalenedicarboxylic acid amide), poly(2-chloro-paraphenyleneterephthalamide) and a paraphenxleneterephthalarnide/2,6-dichloroparaphenyleneterephthalamide copolymer.

The aromatic polyimide is preferably a wholly aromatic polyimide produced by condensation polymerization of an aromatic diacid anhydride and a diamine. Specific examples of the diacid anhydride include pyromellitic dianhydride, 3,3',4,4'-diphenylsulfonetetracarboxylic dianhydride, 3,3',4,4'-benzophenonetetracarboxylic dianhydride, 2,2'-bis(3,4-dicarboxyphenyl)hexafluoxopxopane and 3,3',4,4'-biphenyltetracarboxylic dianhydride. Examples of the diamine include oxydianiline, para-phenylenediamine, benzophenonediamine, 3,3'-methylenedianiline, 3,3'-diaminobenzophenone, 3,3'-diaminodiphenylsulfone, and 1,5'-naphthalenediamine. A polyimide soluble in a solvent may be suitably used. Examples of such a polyimide include a polyimide as a polycondensate of 3,3',4,4'-diphenylsulfonetetracarboxylic dianhydride with an aromatic diamine.

Examples of the aromatic polyamideimide include those obtained by condensation polymerization of an aromatic dicarboxylic acid and an aromatic diisocyanate, and those obtained by condensation polymerization of an aromatic diacid anhydride and an aromatic diisocyanate. Specific examples of the aromatic dicarboxylic acid include isophthalic acid and terephthalic acid. Specific examples of the aromatic diacid anhydride include trimellitic anhydride. Specific examples of the aromatic diisocyanate include 4,4'-diphenylmethane diisocyanate, 2,4-tolylene diisocyanate, 2,6-tolylene diisocyanate, ortho-tolylene diisocyanate and m-xylylene diisocyanate.

The filler that may be contained in the heat-resistant layer may be any one selected from an organic powder, an inorganic powder and a mixture thereof. The average particle diameter of the particle constituting the filler is preferably from 0.01 to 1 µm or less. Examples of the shape of the filler include an approximately spherical shape, a plate shape, a columnar shape, an acicular particle, a whisker shape and a fibrous shape, and any particles of these shapes may be used. The filler is preferably an approximately spherical particle due to ease in forming uniform pores.

The organic powder as the filler includes a powder composed of an organic material, such as a homopolymer of or a copolymer of two or more kinds of styrene, vinyl ketone, acrylonitrile, methyl methacrylate, ethyl methacrylate, glycidyl methacrylate, glycidyl acrylate and methyl acrylate; a fluororesin, such as polytetrafluoroethylene, tetrafluoroethylene-hexafluoropropylene copolymer, tetrafluoroethylene-ethylene copolymer and polyvinylidene fluoride; a melamine resin; a urea resin; a polyolefin; and polymethacrylate. The organic powders may be used singly, or in admixture of two or more. Among the organic powders, a polytetrafluoroethylene powder is preferred in view of chemical stability.

Examples of the inorganic powder as the filler include a powder composed of an inorganic material, such as metal oxide, metal nitride, metal carbide, metal hydroxide, carbonate and sulfate. Specific examples thereof include a powder composed of alumina, silica, titanium dioxide or calcium carbonate. The inorganic powders may be used singly, or in admixture of two or more. Among the inorganic powders, an alumina powder is preferred in view of chemical stability. It is preferred that all of the particles constituting the filler be an alumina particle, and more preferred that all of the particles constituting the filler be an alumina particle, and a part or all thereof are an approximately spherical alumina particle.

The content of the filler in the heat-resistant layer varies depending on the specific gravity of the material used for the filler. For example, in the case where all of the particles constituting the filler are an alumina particle, the weight of the filler is usually from 20 to 95 parts by weight, preferably from 30 to 90 parts by weight, assuming that the total weight of the heat-resistant layer is 100 parts by weight. This range can be appropriately set, depending on the specific gravity of the material used for the filler.

### (Shutdown Layer)

In the porous laminate film, the shutdown layer contains a thermoplastic resin. The thickness of the shutdown layer is usually from 3 to 30 µm, preferably from 3 to 20 µm. The shutdown layer has fine pores similarly to the heat-resistant layer, and the size of the pore is usually 3 µm or less, preferably 1 µm or less. The void content of the shutdown layer is usually from 30 to 80 vol%, preferably from 40 to 70 vol%. When a temperature of nonaqueous electrolyte secondary battery exceeds a usual use temperature, the shutdown layer plays a roll of clogging the fine pores due to softening of the thermoplastic resin constituting the shutdown layer.

The thermoplastic resin contained in the shutdown layer includes a resin that is softened at 80 to 180°C, and a thermoplastic resin which does not dissolve in the electrolytic solution of a nonaqueous electrolyte secondary battery may be selected. Specific examples of the thermoplastic resin include a polyolefin, such as polyethylene and polypropylene, and a thermoplastic polyurethane. A mixture of two or more of these resins may be used. In order to activate a shutdown by softening at a lower temperature, the thermoplastic resin is preferably polyethylene. The polyethylene specifically includes a polyethylene, such as low-density polyethylene, high-density polyethylene and linear polyethylene, and also includes an ultrahigh molecular-weight polyethylene. For further enhancing the piercing strength of the shutdown layer, the thermoplastic resin preferably contains at least an ultrahigh molecular-weight polyethylene. In view of production of the shutdown layer, it is sometimes preferred that the thermoplastic resin contains a wax composed of a polyolefin of low molecular-weight (weight average molecular weight of 10,000 or less).

### <Sodium Secondary Battery of the Present Invention/Electrolytic Solution or Solid Electrolyte>

The examples of the electrolytic solution usable in the sodium secondary battery of the present invention include NaClO₄, NaPF₆, NaAsF₆, NaSbF₆, NaBF₄, NaCF₃SO₃, NaN(SO₂CF₃)₂, sodium salt of lower aliphatic carboxylate, and NaAlCl₄. A mixture of two or more thereof may be used. Among these, an electrolyte containing fluorine, which contains at least one member selected from the group consisting of NaPF₆, NaAsF₆, NaSbF₆, NaBF₄, NaCF₃SO₃ and NaN(SO₂CF₃)₂, is preferably used.

In the electrolytic solution usable in the sodium secondary battery of the present invention, examples of the organic solvent, which can be used include carbonates, such as propylene carbonate, ethylene carbonate, dimethyl carbonate, diethyl carbonate, ethyl methyl carbonate, isopropyl methyl carbonate, vinylene carbonate, 4-trifluoromethyl-1,3-dioxolan-2-one and 1,2-di(methoxycarbonyloxy)ethane; ethers, such as 1,2-dimethoxyethane, 1,3-dimethoxypropane, pentafluoropropylmethyl ether, 2,2,3,3-tetrafluoropropyldifluoromethyl ether, tetrahydrofuran and 2-methyltetrahydrofuran; esters, such as methyl formate, methyl acetate and γ-butyrolactone; nitrites, such as acetonitrile and butyronitrile; amides, such as N,N-dimethylformamide and N,N-dimethylacetamide; carbamates, such as 3-methyl-2-oxazolidone; sulfur-containing compounds, such as sulfolane, dimethyl sulfoxide and 1,3-propanesultone; and those obtained by introducing a fluorine substituent into the organic solvent above. Usually, two or more of the organic solvents are mixed and used.

A solid electrolyte may also be used in place of the electrolytic solution. Examples of the solid electrolyte which can be used include an organic polymer electrolyte, such as polyethylene oxide-based polymer, and polymer containing at least one or more of polyorganosiloxane chains or polyoxyalkylene chains. A so-called gel-type electrolyte holding a nonaqueous electrolyte solution in a polymer can also be used. An inorganic solid electrolyte, such as sulfide electrolyte (e.g., Na₂S-SiS₂, Na₂S-GeS₂) and NASCON-type electrolyte (e.g., NaZr₂(PO₄)₃) may also be used. When such a solid electrolyte is used, safety can be enhanced in some cases. In the case of using a solid electrolyte in the sodium secondary battery of the present invention, the solid electrolyte sometimes works as the separator and in this case, a separator may not be necessary.

### EXAMPLES

The present invention is described in greater detail below by referring to examples, but the present invention is not limited thereto by any means. Incidentally, unless otherwise indicated, a production method of an electrode and a test battery for a charge/discharge test, and a measurement method of powder X-ray diffraction are as follows.

### (1) Production of Electrode (Positive Electrode)

A mixed metal oxide as a positive electrode active material, an acetylene black (produced by Denki Kagaku Kogyo Kabushiki Kaisha) as an electrically conductive material, and PVDF (PolyVinylidine DiFluoride Polyflon, produced by Kureha Corporation) as a binder were weighed to obtain a composition of positive electrode active material : electrically conductive material : binder = 85:10:5 (by weight). Thereafter, the mixed metal oxide and acetylene black were thoroughly mixed in an agate mortar, an appropriate amount of N-methyl-2-pyrrolidone . (NMP, produced by Tokyo Chemical Industry Co., Ltd.) was added to the mixture, PVDF was further added, and these were then uniformly mixed to form a slurry. The obtained slurry was coated on a 40 µm-thick aluminum foil as a current collector by using an applicator to a thickness of 100 µm, and the aluminum foil having the coated slurry was placed in a drier and thoroughly dried by removing NMP to obtain an electrode sheet. This electrode sheet was punched with a diameter of 1.5 cm by an electrode punch, and sufficiently fixed under pressure by a hand press to obtain a positive electrode sheet.

### (2) Production of Test Battery

The positive electrode sheet was placed in a recess of the bottom part of a coin cell (manufactured by Hohsen Corp.) by arranging the aluminum foil to face downward and combined with a 1 M NaClO₄/propylene carbonate as an electrolyte, a polypropylene porous film (thickness: 20 µm) as a separator, and a sodium metal (produced by Aldrich Chemical Company, Inc.) as a negative electrode to produce a test battery. Assembling of the test battery was performed in a glove box under an argon atmosphere.

### (3) Powder X-Ray Diffraction Measurement

The measurement was performed under the following conditions by using a powder X-ray diffraction measuring apparatus, Model RINT2500TTR, manufactured by Rigaku Corporation.
X-ray: CuKα
Voltage-current: 40 kV-140 mA
Measuring angle range: 2θ = 10-60°
Step: 0.02°
Scan speed: 4°/min

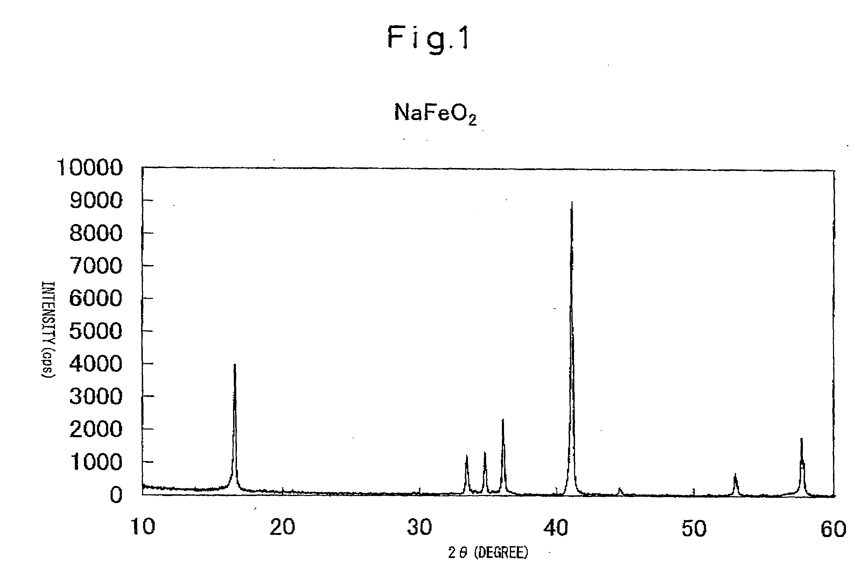

Comparative Example 1 (NaFeO₂):
(1) Synthesis of Positive Electrode Active Material
Sodium carbonate (Na₂CO₃, produced by Wako Pure Chemical Industries, Ltd., purity: 99.8%) and iron(II, III) oxide (Fe₃O₄, produced by Kojundo Chemical Laboratory Co., Ltd., purity: 99%), as metal-containing compounds, were weighed to obtain a Na:Fe molar ratio of 1.00:1.00, and mixed in a dry ball mill over 4 hours to obtain a mixture of the metal-containing compounds. The obtained mixture of the metal-containing compounds was placed in an alumina boat, heated in an air atmosphere by using an electric furnace, and kept at 750°C over 2 hours to obtain the mixed metal oxide (formula: NaFeO₂) of Comparative Example 1. Fig. 1 shows the result of the powder X-ray diffraction measurement of the mixed metal oxide of Comparative Example 1. According to Fig. 1, it was confirmed that the mixed metal oxide of Comparative Example 1 has a hexagonal α-NaFeO₂-type (layered rocksalt-type) crystal structure, and is composed of a single phase of the hexagonal α-NaFeO₂-type (layered rocksalt-type).

(2) Evaluation of Charge/Discharge Performance as Positive Electrode Active Material of Sodium Secondary Battery

A test battery was produced by using the mixed metal oxide of Comparative Example 1 as the positive electrode active material of sodium secondary batteries, and subjected to a constant current charge/discharge test under the following conditions.

Charge/Discharge Conditions:
The charge was performed at the CC (constant current) charge of 0.1 C (rate that requires 10 hours for full charge) up to 4.0 V. The discharge was performed at the CC (constant current) discharge of 0.1 C (rate that requires 10 hours for complete discharge), and the current was cut off at a voltage of 1.5 V.

Charge/discharge of this test battery was repeated 10 cycles, and the discharge capacity for 10th cycle was taken as 100 (hereinafter, the discharge capacity of the positive electrode active material in the test battery is indicated by a relative discharge capacity, assuming that the discharge capacity for 10th cycle of the test battery using the positive electrode active material of Comparative Example 1 is 100). The result is shown in Table 1.

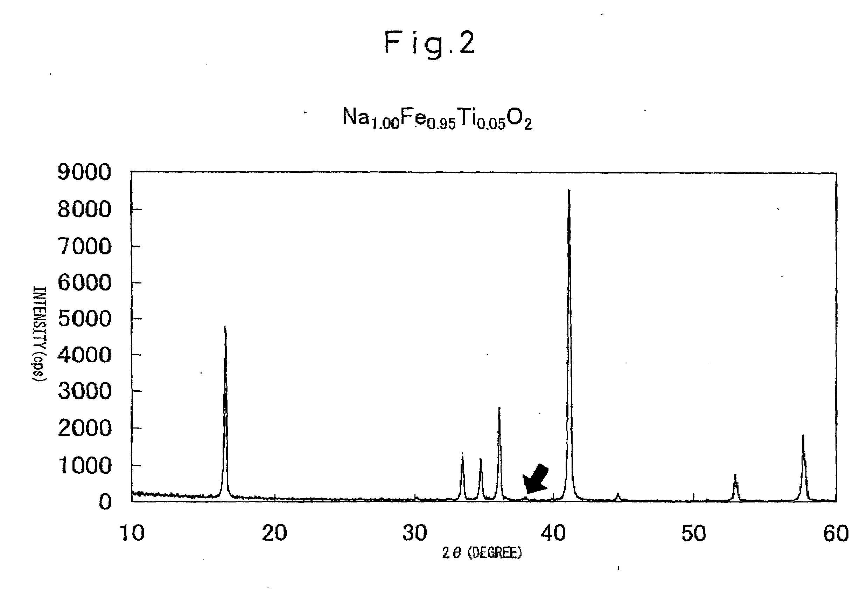

Comparative Example 2 (Na_{1.00}Fe_{0.95}Ti_{0.05}O₂):
(1) Synthesis of Positive Electrode Active Material
Sodium carbonate (Na₂CO₃, produced by Wako Pure Chemical Industries, Ltd., purity: 99.8%), iron(II, III) oxide (Fe₃O₄, produced by Kojundo Chemical Laboratory Co., Ltd., purity: 99%) and titanium oxide (TiO₂ produced by Kojundo Chemical Laboratory Co., Ltd., purity: 99.9%) as metal-containing compounds, were weighed to obtain a Na:Fe:Ti molar ratio of 1.00:0.95:0.05, and mixed in a dry ball mill over 4 hours to obtain a mixture of the metal-containing compounds. The obtained mixture of the metal-containing compounds was placed in an alumina boat, heated in an air atmosphere by using an electric furnace, and kept at 750°C over 2 hours to obtain the mixed metal oxide (formula: Na_{1.00}Fe_{0.95}Ti_{0.05}O₂) of Comparative Example 2. Fig. 2 shows the result of the powder X-ray diffraction measurement of the mixed metal oxide of Comparative Example 2. According to Fig. 2, it was confirmed that the mixed metal oxide of Comparative Example 2 has a hexagonal α-NaFeO₂-type (layered rocksalt-type) crystal structure, but has a peak attributable to sodium carbonate (Na₂CO₃) in the vicinity of 2θ=38°.

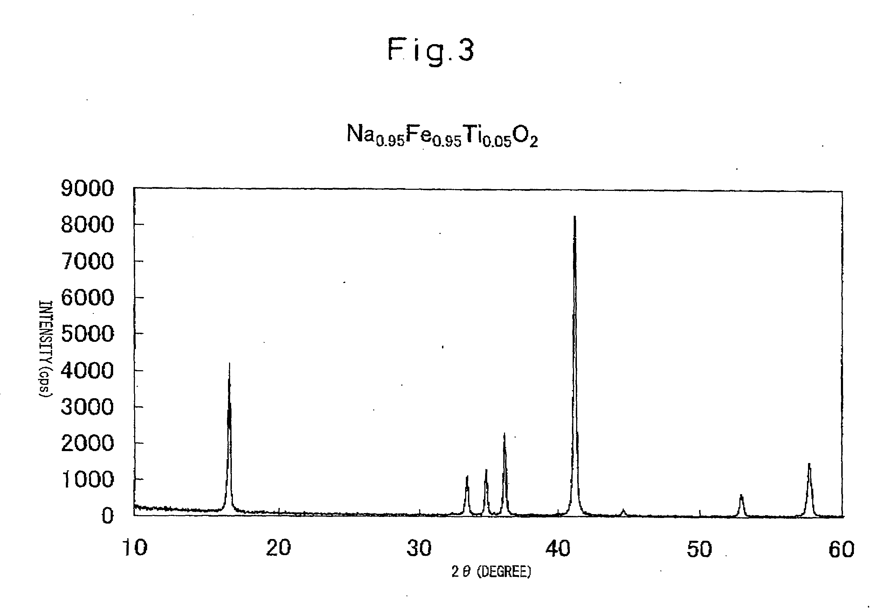

Example 1 (Na_{0.95}Fe_{0.95}Ti_{0.05}O₂):
(1) Synthesis of Positive Electrode Active Material
The mixed metal oxide (formula: Na_{0.95}Fe_{0.95}Ti_{0.05}O₂) of Example 1 was obtained in the same manner as in Comparative Example 2, except for using the metal-containing compounds in amounts to obtain a Na:Fe:Ti molar ratio of 0.95:0.95:0.05. Fig. 3 shows the result of the powder X-ray diffraction measurement of the mixed metal oxide of Example 1. According to Fig. 3, it was confirmed that the mixed metal oxide of Example 1 has a hexagonal α-NaFeO₂-type (layered rocksalt-type) crystal structure, and is composed of a single phase of the hexagonal α-NaFeO₂-type (layered rocksalt-type).

(2) Evaluation of Charge/Discharge Performance as Positive Electrode Active Material of Sodium Secondary Battery
A test battery was produced by using the mixed metal oxide of Example 1 as the positive electrode active material of sodium secondary batteries, and subjected to a constant current charge/discharge test under the same conditions as in Comparative Example 1. The relative discharge capacity of this test battery was 156. The result is shown in Table 1.

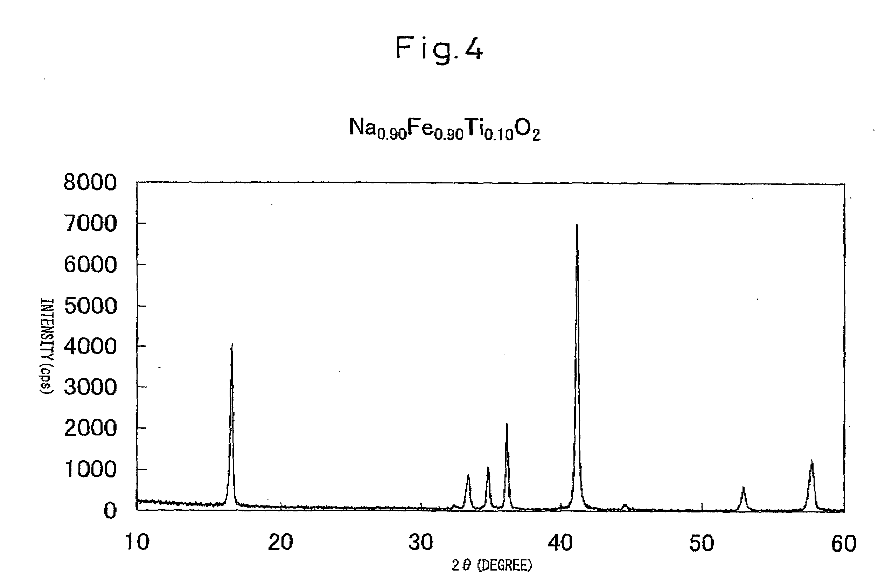

Example 2 (Na_{0.95}Fe_{0.9}Ti_{0.1}O₂):
(1) Synthesis of Positive Electrode Active Material
The mixed metal oxide (formula: Na_{0.9}Fe_{0.9}Ti_{0.1}O₂) of Example 2 was obtained in the same manner as in Comparative Example 2, except for using the metal-containing compounds in amounts to obtain a Na:Fe:Ti molar ratio of 0.90:0.90:0.10. Fig. 4 shows the result of the powder X-ray diffraction measurement of the mixed metal oxide of Example 2. According to Fig. 4, it was confirmed that the mixed metal oxide of Example 2 has a hexagonal α-NaFeO₂-type (layered rocksalt-type) crystal structure, and is composed of a single phase of the hexagonal α-NaFeO₂-type (layered rocksalt-type).

(2) Evaluation of Charge/Discharge Performance as Positive Electrode Active Material of Sodium Secondary Battery
A test battery was produced by using the mixed metal oxide of Example 2 as the positive electrode active material of sodium secondary batteries, and subjected to a constant current charge/discharge test under the same conditions as in Comparative Example 1. The relative discharge capacity of this test battery was 168. The result is shown in Table 1.

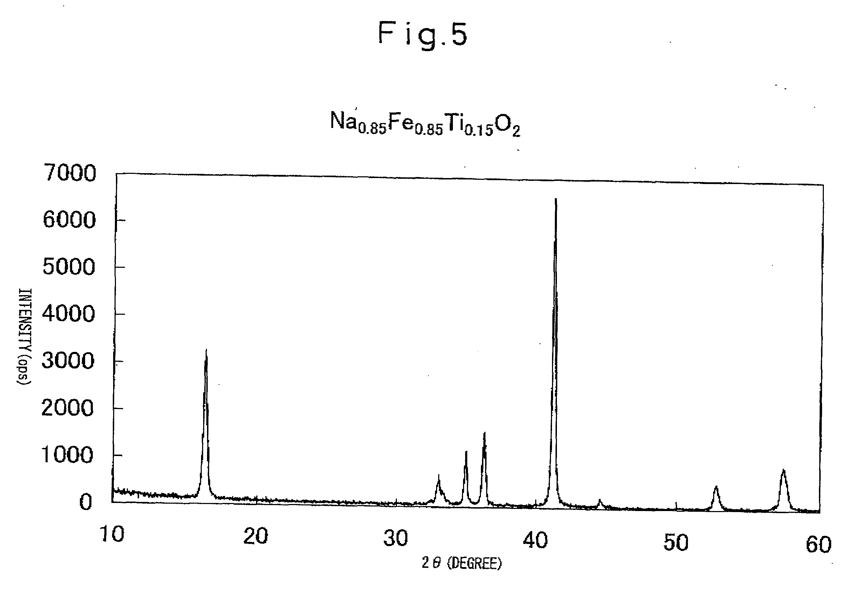

Example 3 (Na_{0.85}Fe_{0.85}Ti_{0.15}O₂) :
(1) Synthesis of Positive Electrode Active Material
The mixed metal oxide (formula: Na_{0.85}Fe_{0.85}Ti_{0.15}O₂) of Example 3 was obtained in the same manner as in Comparative Example 2, except for using the metal-containing compounds in amounts to obtain a Na:Fe:Ti molar ratio of 0.85:0.85:0.15. Fig. 5 shows the result of the powder X-ray diffraction measurement of the mixed metal oxide of Example 3. According to Fig. 5, it was confirmed that the mixed metal oxide of Example 3 has a hexagonal α-NaFeO₂-type (layered rocksalt-type) crystal structure, and is composed of a single phase of the hexagonal α-NaFeO₂-type (layered roeksalt-type).

(2) Evaluation of Charge/Discharge Performance as Positive Electrode Active Material of Sodium Secondary Battery
A test battery was produced by using the mixed metal oxide of Example 3 as the positive electrode active material of sodium secondary batteries, and subjected to a constant current charge/discharge test under the same conditions as in Comparative Example 1. The relative discharge capacity of this test battery was 143. The result is shown in Table 1.

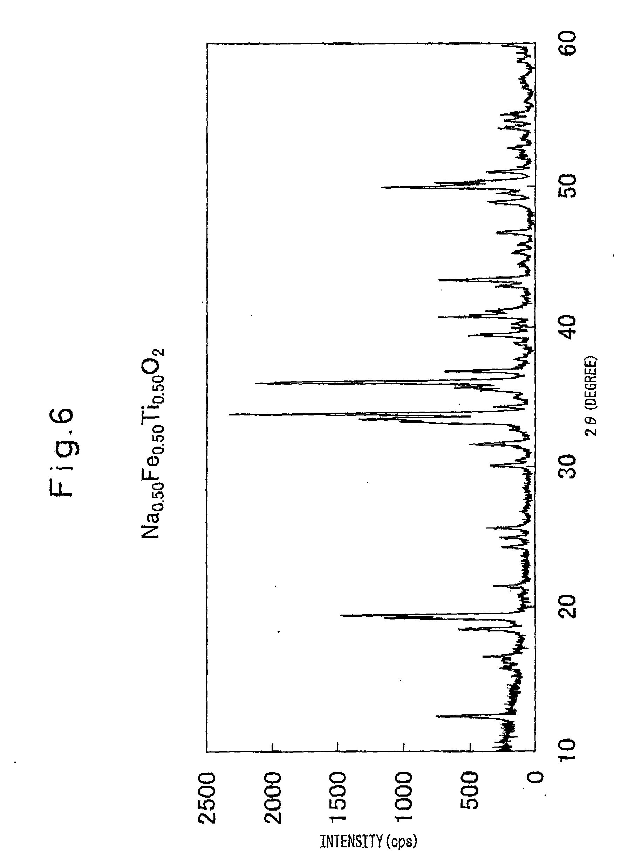

Reference Example (Na_{0.50}Fe_{0.50}Ti_{0.50}O₂):
(1) Synthesis of Positive Electrode Active Material
The mixed metal oxide (formula: Na_{0.50}Fe_{0.50}Ti_{0.50}O₂) of Reference Example was obtained in the same manner as in Comparative Example 2, except for using the metal-containing compounds in amounts to obtain a Na:Fe:Ti molar ratio of 0.50:0.50:0.50. Fig. 6 shows the result of the powder X-ray diffraction measurement of the mixed metal oxide of Reference Example. According to Fig. 6, it was confirmed that the mixed metal oxide of Reference Example has a mixed phase which substantially differs from a hexagonal α-NaFeO₂-type (layered rocksalt-type) crystal structure, and is composed of a mixed phase.

(2) Evaluation of Charge/Discharge Performance as Positive Electrode Active Material of Sodium Secondary Battery
A test battery was produced by using the mixed metal oxide of Reference Example as the positive electrode active material of sodium secondary batteries, and subjected to a constant current charge/discharge test under the same conditions as in Comparative Example 1. The relative discharge capacity of this test battery was 65. The result is shown in Table 1.

[Table 1]

**Table 1: Crystal Structure and Relative Discharge Capacity (Ti substitution)**

| | Composition | Crystal Structure | Relative Discharge Capacity |
|---|---|---|---|
| Comp. Ex. 1 | NaFeO₂ | single phase | 100 |
| Comp. Ex. 2 | Na_{1.00}Fe_{0.95}Ti_{0.05}O₂ | with Na₂CO₃ peak | - |
| Ex. 1 | Na_{0.95}Fe_{0.05}Ti_{0.05}O₂ | single phase | 156 |
| Ex. 2 | Na_{0.90}Fe_{0.05}Ti_{0.10}O₂ | single phase | 168 |
| Ex. 3 | Na_{0.85}Fe_{0.85}Ti_{0.15}O₂ | single phase | 143 |
| Ref. Ex. | Na_{0.05}Fe_{0.05}Ti_{0.05}O₂ | mixed phase | 65 |

In Table 1, it is shown that, as compared with Comparative Examples 1 and 2 and Reference Example, the mixed metal oxides of the present invention in Examples 1 to 3 have a large discharge capacity, and that the mixed metal oxides of the present invention in Examples 1 to 3 are composed of a single phase.

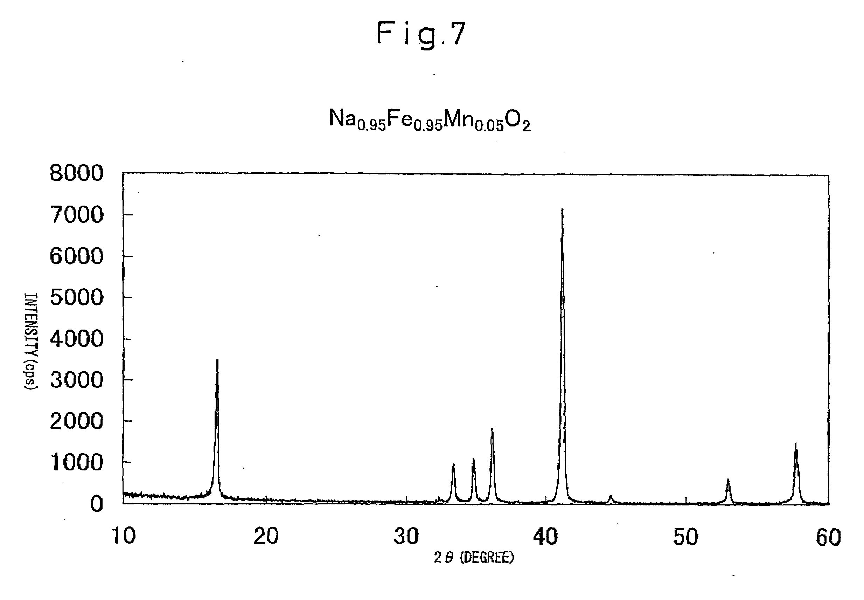

Example 4 (Na_{0.95}Fe_{0.95}Mn_{0.05}O₂):
(1) Synthesis of Positive Electrode Active Material
Sodium carbonate (Na₂CO₃, produced by Wako Pure Chemical Industries, Ltd., purity: 99.8%), iron(II, III) oxide (Fe₃O₄, produced by Kojundo Chemical Laboratory Co., Ltd., purity: 99%) and manganese(IV) oxide (MnO₂, produced by Kojundo Chemical Laboratory Co., Ltd., purity: 99.9%), as metal-containing compounds, were weighed to obtain a Na:Fe:Mn molar ratio of 0.95:0.95:0.05, and mixed in a dry ball mill over 4 hours to obtain a mixture of the metal-containing compounds. The obtained mixture of the metal-containing compounds was placed in an alumina boat, heated in an air atmosphere by using an electric furnace, and kept at 750°C over 2 hours to obtain the mixed metal oxide (formula: Na_{0.95}Fe_{0.95}Mn_{0.05}O₂) of Example 4. Fig. 7 shows the result of the powder X-ray diffraction measurement of the mixed metal oxide of Example 4. According to Fig. 7, it was confirmed that the mixed metal oxide of Example 4 has a hexagonal α-NaFeO₂-type (layered rocksalt-type) crystal structure, and is composed of a single phase of the hexagonal α-NaFeO₂-type (layered rocksalt-type).

(2) Evaluation of Charge/Discharge Performance as Positive Electrode Active Material of Sodium Secondary Battery
A test battery was produced by using the mixed metal oxide of Example 4 as the positive electrode active material of sodium secondary batteries, and subjected to a constant current charge/discharge test under the same conditions as in Comparative Example 1. The relative discharge capacity of this test battery was 122. The result is shown in Table 2.

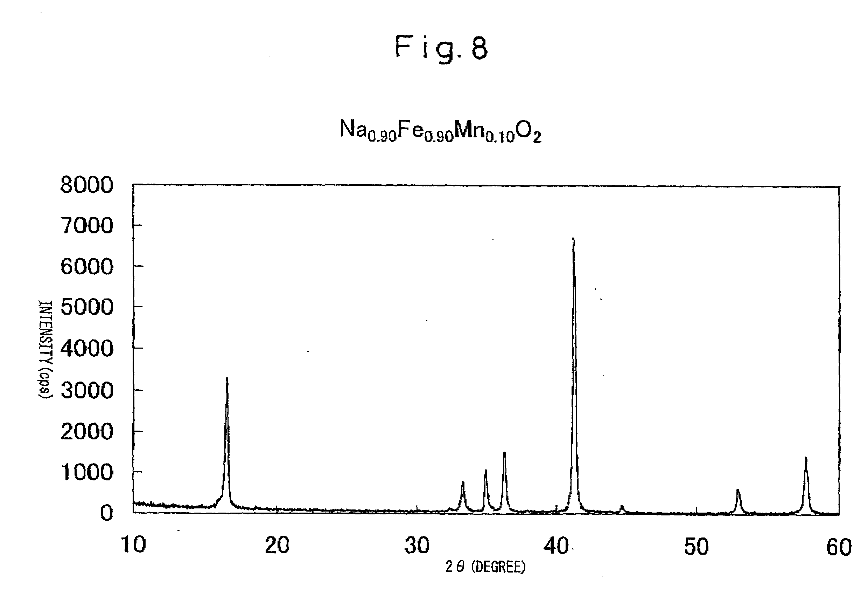

Example 5 (Na_{0.9}Fe_{0.9}Mn_{0.1}O₂):
(1) Synthesis of Positive Electrode Active Material
The mixed metal oxide (formula: Na_{0.9}Fe_{0.9}Mn_{0.1}O₂) of Example 5 was obtained in the same manner as in Example 4, except for using the metal-containing compounds in amounts to obtain a Na:Fe:Mn molar ratio of 0.90:0.90:0.10. Fig. 8 shows the result of the powder X-ray diffraction measurement of the mixed metal oxide of Example 5. According to Fig. 8, it was confirmed that the mixed metal oxide of Example 5 has a hexagonal α-NaFeO₂-type (layered rocksalt-type) crystal structure, and is composed of a single phase of the hexagonal α-NaFeO₂-type (layered rocksalt-type).

(2) Evaluation of Charge/Discharge Performance as Positive Electrode Active Material of Sodium Secondary Battery

A test battery was produced by using the mixed metal oxide of Example 5 as the positive electrode active material of sodium secondary batteries, and subjected to a constant current charge/discharge test under the same conditions as in Comparative Example 1. The relative discharge capacity of this test battery was 146. The result is shown in Table 2.

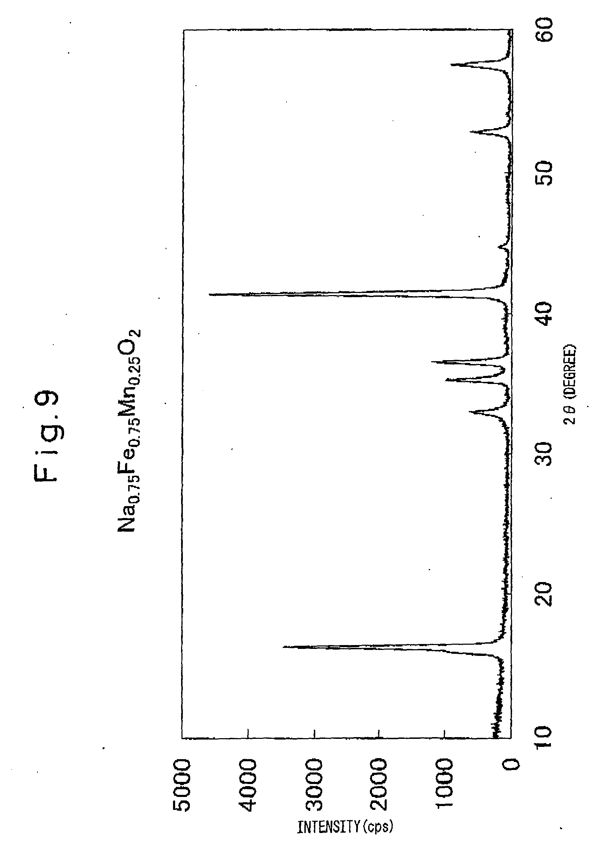

Example 6 (Na_{0.75}Fe_{0.75}Mn_{0.25}O₂) :
(1) Synthesis of Positive Electrode Active Material
The mixed metal oxide (formula: Na_{0.75}Fe_{0.75}Mn_{0.25}O₂) of Example 6 was obtained in the same manner as in Example 4, except for using the metal-containing compounds in amounts to obtain a of Na:Fe:Mn molar ratio of 0.75:0.75:0.25. Fig. 9 shows the result of the powder X-ray diffraction measurement of the mixed metal oxide of Example 6. According to Fig. 9, it was confirmed that the mixed metal oxide of Example 6 has a hexagonal α-NaFeO₂-type (layered rocksalt-type) crystal structure, and is composed of a single phase of the hexagonal α-NaFeO₂-type (layered rocksalt-type).

(2) Evaluation of Charge/Discharge Performance as Positive Electrode Active Material of Sodium Secondary Battery
A test battery was produced by using the mixed metal oxide of Example 6 as the positive electrode active material of sodium secondary batteries, and subjected to a constant current charge/discharge test under the same conditions as in Comparative Example 1. The relative discharge capacity of this test battery was 267. The result is shown in Table 2.

[Table 2]

**Table 2: Crystal Structure and Relative Discharge Capacity (Mn substitution)**

| | Composition | Crystal Structure | Relative Discharge Capacity |
|---|---|---|---|
| Comp. Ex. 1 | NaFeO₂ | single phase | 100 |
| Ex. 4 | Na_{0.95}Fe₀.₉₅Mn_{0.05}O₂ | single phase | 122 |
| Ex. 5 | Na_{0.90}Fe_{0.90}Mn_{0.10}O₂ | single phase | 146 |
| Ex. 6 | Na₀.₇₅Fe_{0.75}Mn_{0.25}O₂ | single phase | 267 |

In Table 2, it is shown that, as compared with the mixed metal oxide of Comparative Example 1, the mixed metal oxides of Examples 4 to 6 have a large discharge capacity, and that the mixed metal oxides of Examples 4 to 6 are composed of a single phase.

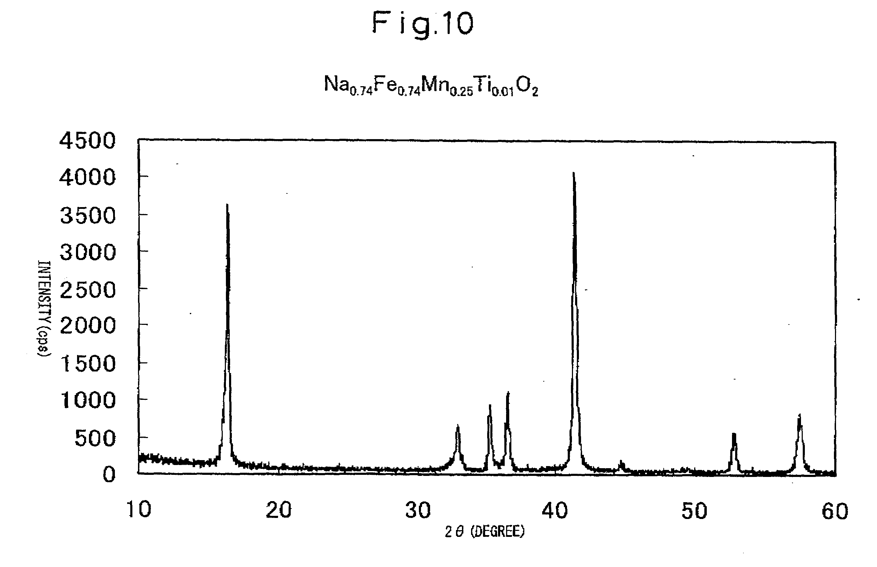

Example 7 (Na_{0.74}Fe_{0.74}Mn_{0.25}Ti_{0.01}O₂) :
(1) Synthesis of Positive Electrode Active Material
Sodium carbonate (Na₂CO₃, produced by Wako Pure Chemical Industries, Ltd., purity: 99.8%), iron(II, III) oxide (Fe₃O₄, produced by Kojundo Chemical Laboratory Co., Ltd. purity: 99%), manganese(IV) oxide (MnO₂, produced by Kojundo Chemical Laboratory Co., Ltd., purity: 99.9%) and titanium oxide (TiO₂, produced by Kojundo Chemical Laboratory Co., Ltd., purity: 99.9%), as metal-containing compounds, were weighed to obtain a Na:Fe:Mn:Ti molar ratio of 0.74:0.74:0.25:0.01, and mixed in a dry ball mill over 4 hours to obtain a mixture of the metal-containing compounds. The obtained mixture of the metal-containing compounds was placed in an alumina boat, heated in an air atmosphere by using an electric furnace, and kept at 750°C over 2 hours to obtain the mixed metal oxide (formula: Na_{0.74}Fe_{0.74}Mn_{0.25}Ti_{0.01}O₂) of Example 7. Fig. 10 shows the result of the powder X-ray diffraction measurement of the mixed metal oxide of Example 7. According to Fig. 10, it was confirmed that the mixed metal oxide of Example 7 has a hexagonal α-NaFeO₂-type (layered rocksalt-type) crystal structure, and is composed of a single phase of the hexagonal α-NaFeO₂-type (layered rocksalt-type).

(2) Evaluation of Charge/Discharge Performance as Positive Electrode Active Material of Sodium Secondary Battery
A test battery was produced by using the mixed metal oxide of Example 7 as the positive electrode active material of sodium secondary batteries, and subjected to a constant current charge/discharge test under the same conditions as in Comparative Example 1. The relative discharge capacity of this test battery was 260. The result is shown in Table 3.

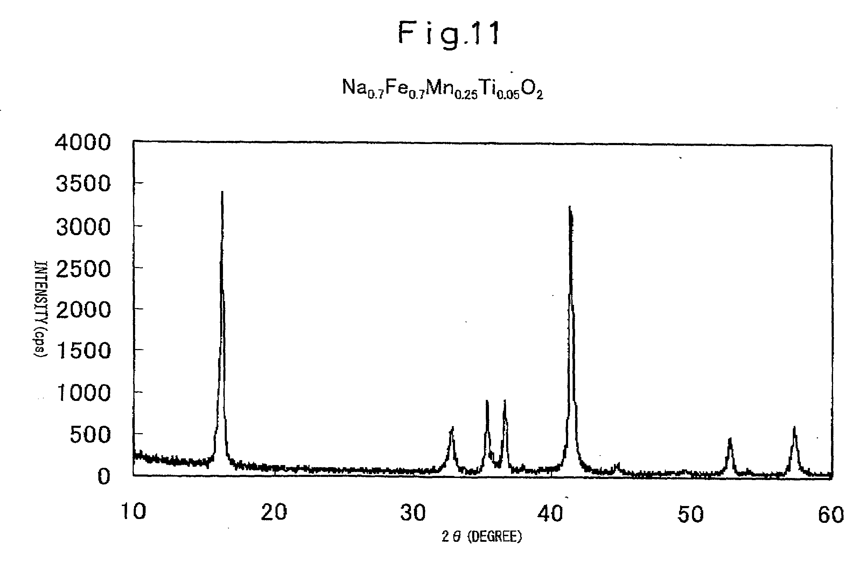

Example 8 (Na_{0.70}Fe_{0.70}Mn_{0.25}Ti_{0.05}O₂) :
(1) Synthesis of Positive Electrode Active Material
The mixed metal oxide (formula: Na_{0.7}Fe₀.₇Mn₀.₂₅Ti_{0.05}O₂) of Example 8 was obtained in the same manner as in Example 7, except for using the metal-containing compounds in amounts to obtain a Na:Fe:Mn:Ti molar ratio of 0.7:0.7:0.25:0.05. Fig. 11 shows the result of the powder X-ray diffraction measurement of the mixed metal oxide of Example 8. According to Fig. 11, it was confirmed that the mixed metal oxide of Example 8 has a hexagonal α-NaFeO₂-type (layered rocksalt-type) crystal structure, and is composed of a single phase of the hexagonal α-NaFeO₂-type (layered rocksalt-type).

(2) Evaluation of Charge/Discharge Performance as Positive Electrode Active Material of Sodium Secondary Battery
A test battery was produced by using the mixed metal oxide of Example 8 as the positive electrode active material of sodium secondary batteries, and subjected to a constant current charge/discharge test under the same conditions as in Comparative Example 1. The relative discharge capacity of this test battery was 200. The result is shown in Table 3.

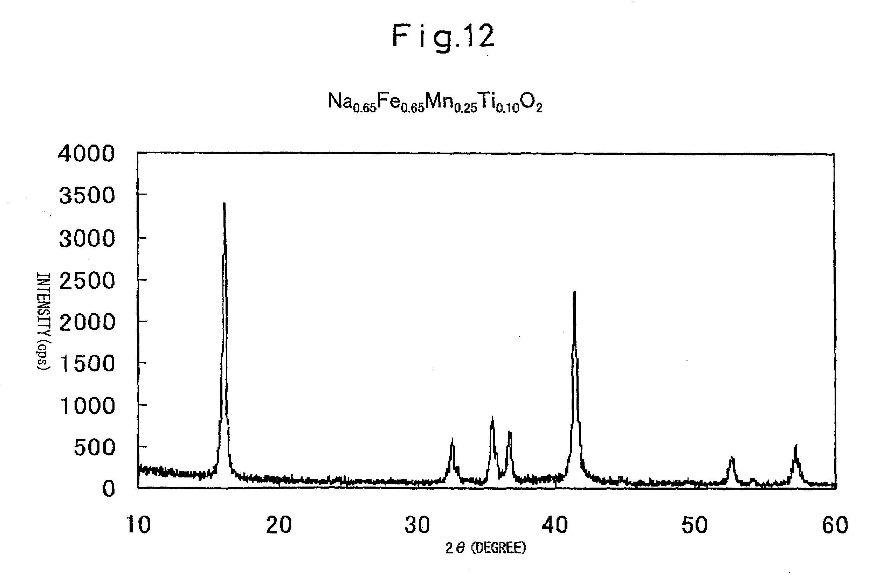

Example 9 (Na_{0.65}Fe_{0.65}Mn_{0.25}Ti_{0.10}O₂) :
(1) Synthesis of Positive Electrode Active Material
The mixed metal oxide (formula: Na_{0.65}Fe_{0.65}Mn_{0.65}Ti_{0.01}O₂) of Example 9 was obtained in the same manner as in Example 7, except for using the metal-containing compounds in amounts to obtain a Na:Fe:Mn:Ti molar ratio of 0.65:0.65:0.25:0.10. Fig. 12 shows the result of the powder X-ray diffraction measurement of the mixed metal oxide of Example 9. According to Fig. 12, it was confirmed that the mixed metal oxide of Example 9 has a hexagonal α-NaFeO₂-type (layered rocksalt-type) crystal structure, and is composed of a single phase of the hexagonal α-NaFeO₂-type (layered rocksalt-type).

(2) Evaluation of Charge/Discharge Performance as Positive Electrode Active Material of Sodium Secondary Battery
A test battery was produced by using the mixed metal oxide of Example 9 as the positive electrode active material of sodium secondary batteries, and subjected to a constant current charge/discharge test under the same conditions as in Comparative Example 1. The relative discharge capacity of this test battery was 163. The result is shown in Table 3.

[Table 3]

**Table 3: Crystal Structure and Relative Discharge Capacity (Mn and Ti substitution)**

| | Composition | Crystal structure | Relative Discharge Capacity |
|---|---|---|---|
| Comp. Ex. 1 | NaFeO₂ | single phase | 100 |
| Ex. 7 | Na_{0.74}Fe_{0.74}Mn_{0.25}Ti_{0.01}O₂ | single phase | 260 |
| Ex. 8 | Na_{0.70}Fe_{0.70}Mn_{0.25}Ti_{0.05}O₂ | single phase | 200 |
| Ex. 9 | Na_{0.65}Fe_{0.65}Mn_{0.25}Ti_{0.10}O₂ | single phase | 163 |

In Table 3, it is shown that, as compared with the mixed metal oxide of Comparative Example 1, the mixed metal oxides of Examples 7 to 9 have a large discharge capacity, and that the mixed metal oxides of Examples 7 to 9 are composed of a single phase.

Production Example 1 (production of porous laminate film):
(1) Production of Coating Solution for Heat-Resistant Layer
After dissolving 272.7 g of calcium chloride in 4,200 g of N-methyl-2-pyrrolidone (NMP), 132.9 g of para-phenylenediamine was added and completely dissolved. To the obtained solution, 243.3 g of terephthalic acid dichloride was gradually added to effect the polymerization, and thereby obtain a para-aramide. The obtained solution was further diluted with NMP to obtain a para-aramide solution having a concentration of 2.0 wt%. To 100 g of the obtained para-aramide solution, 2 g of a first alumina powder (Alumina C, produced by Nippon Aerosil Co., Ltd., average particle diameter: 0.02 µm) and 2 g of a second alumina powder (Sumicorundum AA03, produced by Sumitomo Chemical Co., Ltd., average particle diameter: 0.3 µm), as a filler in total of 4 g, were added and mixed. The resulting mixture was subjected to a nanomizer three times, filtered with a 1,000-mesh metal screen, and defoamed under reduced pressure to produce a slurried coating solution for heat-resistant layer. The amount of the alumina powder (filler) was 67 wt%, based on the total weight of the para-aramide and alumina powder.

(2) Production of Porous Laminate Film
As the shutdown layer, a polyethylene porous film (film thickness of 12 µm, air permeability of 140 seconds/100 ml, average pore diameter of 0.1 µm, void content of 50%) was used. The polyethylene porous film above was fixed on a 100 µm-thick PET film, and the slurried coating solution for heat-resistant layer was coated on the porous film by a bar coater manufactured by Tester Sangyo Co,. Ltd. The coated porous film on the PET film was, while maintaining the integrity, dipped in water, which is a poor solvent, to precipitate a para-aramide porous film (heat-resistant layer). After that, the solvent was dried to obtain a porous laminate film comprising a heat-resistant layer and a shutdown layer laminated thereon.

(3) Evaluation of Porous Laminate Film
The thickness of the porous laminate film was 16 µm, and the thickness of the para-aramide porous film (heat-resistant layer) was 4 µm. The air permeability of the porous laminate film was 180 seconds/100 ml, and the void content was 50%. The cross-section of the heat-resistant layer in the porous laminate film was observed by a scanning electron microscope (SEM), as a result, the heat-resistant layer was found to have relatively small pores of approximately 0.03 to 0.06 µm and relatively large pores of approximately 0.1 to 1 µm.

Evaluations of the porous laminate film were performed as in the following (A) to (C).

(A) Thickness Measurement
The thicknesses of the porous laminate film and the shutdown layer were measured in accordance with JIS standards (K7130-1992). The thickness of the heat-resistant layer was calculated by subtracting the thickness of the shutdown layer from the thickness of the porous laminate film.

(B) Measurement of Air Permeability by Gurley Method
The air permeability of the porous laminate film was measured based on JIS P8117 by a digital-timer type Gurley densometer manufactured by Yasuda Seiki Seisakusho, Ltd.

(C) Void Content
The obtained porous laminate film sample was cut into a square shape which is 10 cm on each side, and the weight W (g) and the thickness D (cm) were measured. The weight (Wi (g)) of each layer in the sample was determined, the volume of each layer was determined from wi and the true specific gravity (true specific gravity i (g/cm³)) of each layer, and the void content (vol%) was determined according to the following formula:
Void content (vol%) = 100×{1-(W1/true specific gravity 1 + W2/true specific gravity 2 + ... + Wn/true specific gravity n)/(10×10×D)}

When the porous laminate film obtained herein is used as the separator in the sodium secondary batteries of the above Examples, the sodium secondary butteries can more successfully prevent thermal film rupture.

## Claims

1. A mixed metal oxide, wherein the mixed metal oxide has an α-NaFeO₂-type (layered rocksalt-type) crystal structure and is represented by the following formula (I):
NaₓFe_{1-y}M_{y}O₂ (I)
wherein M is one or more elements selected from Group 4 elements, Group 5 elements, Group 6 elements and Group 14 elements of the IUPAC Periodic Table and Mn, x is a value in the range of more than 0.5 and less than 1, and y is a value in the range of more than 0 and less than 0.5.

2. The mixed metal oxide according to claim 1, wherein the mixed metal oxide is composed of a single phase of an α-NaFeO₂-type (layered rocksalt-type) crystal structure.

3. The mixed metal oxide according to claim 1, or 2, wherein M at least contains one or more elements selected from Group 4 elements of the IUPAC Periodic Table.

4. The mixed metal oxide according to claim 1 or 2, wherein M contains at least Ti or Mn.

5. The mixed metal oxide according to claim 4, wherein M is Ti and/or Mn.

6. The mixed metal oxide according to claim 5, wherein M is Ti.

7. The mixed metal oxide according to claim 6, wherein y is a value in the range of more than 0 and less than 0.25.

8. The mixed metal oxide according to claim 5, wherein M is Mn.

9. The mixed metal oxide according to any one of claims 1 to 8, wherein the mixed metal oxide is to be used as a positive electrode active material for sodium secondary batteries.

10. A positive electrode for sodium secondary batteries, wherein the positive electrode contains the mixed metal oxide according to claim 9.

11. A sodium secondary battery having the positive electrode for sodium secondary batteries according to claim 10.

12. The sodium secondary battery according to claim 11 further having a separator.

13. The sodium secondary battery according to claim 12, wherein the separator is a separator having a porous laminate film obtained by laminating a heat-resistant layer containing a heat-resistant resin and a shutdown layer containing a thermoplastic resin.
